# EUROPEAN PATENT APPLICATION

(11) **EP 4 629 685 A1**
(43) Date of publication of application: **08.10.2025**
(21) Application number: 23909524.3
(22) Date of filing: 24.10.2023
(51) Int. Cl.: H04W 16/14, H04B 1/525, H04W 4/80

(54) **ANTI-MUTUAL-INTERFERENCE REGULATION METHOD FOR TERMINAL NETWORKS, TERMINAL AND COMPUTER-READABLE STORAGE MEDIUM**

(30) Priority: 30.12.2022 CN 202211723338
(71) Applicant: ZTE CORPORATION, Shenzhen, Guangdong 518057 (CN)
(72) Inventor: SHEN, Shaowu, Shenzhen, Guangdong 518057 (CN); CHEN, Chunlei, Shenzhen, Guangdong 518057 (CN)
(74) Representative: Canzler & Bergmeier Patentanwälte Partnerschaft mbB
(86) International application number: PCT/CN2023/126140
(87) International publication number: WO 2024/139590

(57) **Abstract**

Provided in the present disclosure is an anti-mutual-interference regulation method for terminal networks, comprising: judging whether mutual interference is present between a mobile network and a WiFi network of a terminal; in response to mutual interference being present between the mobile network and the WiFi network, determining a mutual interference path where mutual interfere is present between the mobile network and the WiFi network; and performing anti-mutual-interference regulation according to the mutual interference path. Further provided in the present disclosure are a terminal and a computer-readable storage medium.

## Description

### CROSS-REFERENCE TO RELATED APPLICATIONS

The present disclosure claims the priority of Chinese Patent Application No. 202211723338.0, filed on December 30, 2022, the contents of which are incorporated herein in their entirety by reference.

### TECHNICAL FIELD

The present disclosure relates to the field of communications technologies, and in particular, to an anti-mutual-interference regulation method for terminal networks, a terminal, and a computer-readable storage medium.

### BACKGROUND

With the advancement of 5G terminals, WiFi technology has evolved from WiFi 5 to WiFi 6 and WiFi 7, with frequency bands expanding from conventional 2.4GHz to 5GHz, 6GHz, and up to 7.2GHz; and, advancements in 5G New Radio (NR) technology have enabled downlink/uplink NR to evolve from single NR band to 2CA and 3CA, with expected to 5CA and 6CA in the future. Herein, "CA" refers to Carrier Aggregation.

With expectations of users for a higher speed, a multi-network convergence technology has been evolved, that is, a single WiFi frequency band and a single NR frequency band no longer operate independently but operate simultaneously for concurrent transmission or reception, and Multiple-input Multiple-output (MIMO) of them may also operate simultaneously for concurrent transmission or reception, resulting in a throughput rate of a system being a combined throughput rate of them.

For convergences between WiFi 2.4G, WiFi 5G, WiFi 6G, and NR, the convergence between WiFi 2.4G, WiFi 5G, and NR is termed triple-network convergence; the convergence between WiFi 2.4G, WiFi 5G, WiFi 6G, and NR is termed four-network convergence; the convergence between WiFi 2.4G, WiFi 5G, WiFi 6G, and N78 and N79 is termed five-network convergence.

Currently, a mutual interference between WiFi and NR may occur in 5G terminals, 5G Customer Premises Equipment (CPE) and other electronic equipment with WiFi; WiFi 7 introduces a WiFi 6G frequency band, bringing WiFi frequency points to be closer to NR, so that the mutual interference between WiFi and NR is more serious, and a great challenge is caused for realizing simultaneous transmission of WiFi and NR under a convergence of multi networks.

### SUMMARY

In a first aspect, an embodiment of the present disclosure provides an anti-mutual-interference regulation method for terminal networks, including: determining whether a mutual interference occurs between a mobile network and a WiFi network of a terminal; in response to the mutual interference occurring between the mobile network and the WiFi network, determining a mutual-interference path in which the mutual interference occurs between the mobile network and the WiFi network; performing an anti-mutual-interference regulation according to the mutual-interference path.

In a second aspect, an embodiment of the present disclosure provides a terminal, including: at least one processor; a memory having at least one computer program stored thereon, the at least one computer program, executed by the at least one processor, causes the at least one processor to implement the anti-mutual-interference regulation method for terminal networks as described in the first aspect of the present disclosure.

In a third aspect, an embodiment of the present disclosure provides a computer-readable storage medium having a computer program stored thereon, the computer program, executed by a processor, causes the processor to implement the anti-mutual-interference regulation method for terminal networks as described in the first aspect of the present disclosure.

### BRIEF DESCRIPTION OF DRAWINGS

Fig. 1 is a flowchart of an anti-mutual-interference regulation method for terminal networks in an embodiment of the present disclosure;
Fig. 2 is a flowchart of a part of operations of an anti-mutual-interference regulation method for terminal networks in an embodiment of the present disclosure;
Fig. 3 is a schematic diagram of acquiring wireless performance parameters under a convergence of multi networks;
Fig. 4 is a schematic diagram of determining WiFi-NR mutual interference;
Fig. 5 is a flowchart of a part of operations of an anti-mutual-interference regulation method for terminal networks in an embodiment of the present disclosure;
Fig. 6 is a flowchart of a part of operations of an anti-mutual-interference regulation method for terminal networks in an embodiment of the present disclosure;
Fig. 7 is a schematic diagram of WiFi-NR mutual interference scanning;
Fig. 8 is a schematic structural diagram of a terminal in an embodiment of the present disclosure;
Fig. 9 is a schematic diagram of a computer-readable storage medium in an embodiment of the present disclosure;
Fig. 10 is a schematic structural diagram of a system of a terminal in an embodiment of the present disclosure;
Fig. 11 is a schematic diagram of identifying a WiFi-NR mutual-interference path;
Fig. 12 is a schematic diagram of reconstructing a WiFi-NR mutual-interference path;
Fig. 13 is a schematic diagram of dynamically adjusting a length of an antenna for WiFi-NR anti-mutual-interference;
Fig. 14 is a schematic diagram of dynamically adjusting a length of an antenna for WiFi-NR anti-mutual-interference;
Fig. 15 is schematic diagram of adjusting a ground feed for WiFi-NR anti-mutual-interference;
Fig. 16 is schematic diagram of adjusting a ground feed for WiFi-NR anti-mutual-interference;
Fig. 17 is schematic diagram of dynamically adjusting a tank circuit and a polarization current for WiFi-NR anti-mutual-interference;
Fig. 18 is a schematic diagram of dynamically adjusting a radiation pattern for WiFi-NR anti-mutual-interference; and
Fig. 19 is a schematic diagram of dynamically adjusting a conformation of an antenna for WiFi-NR anti-mutual-interference.

### DETAIL DESCRIPTION OF EMBODIMENTS

In order to make those skilled in the art better understand the technical solutions of the present disclosure, an anti-mutual-interference regulation method for terminal networks, a terminal, and a computer-readable storage medium, provided in the present disclosure are described in detail below with reference to the accompanying drawings.

Exemplary embodiments are described more fully below with reference to the accompanying drawings, but the exemplary embodiments may be embodied in different forms, and the present disclosure should not be construed as limited to the embodiments set forth herein. The embodiments are provided to make the present disclosure more thorough and complete, and for those skilled in the art more fully understanding the scope of the present disclosure.

The embodiments of the present disclosure and the technical features in the embodiments may be combined with each other if no conflict is incurred.

As used in the present disclosure, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" are intended to include plural forms as well, i.e., to indicate at least one, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

With the introduction of MIMO technology in WiFi and NR, the number of WiFi antennas and NR antennas in a terminal is increasing. The WiFi antennas have developed to 4 or even 8 antennas from traditional 1 or 2 antennas; each high-frequency NR frequency band have at least 4 antennas, and two NR frequency bands have at least 8 antennas. Due to a limited layout space in the terminal, the WiFi antennas and the NR antennas are overlapped and intersected, resulting in significant mutual coupling. An isolation between antennas is an important metric for evaluating mutual coupling between the antennas, the greater the mutual coupling between the antennas is, the worse the isolation between the antennas is. The limited layout space in the terminal is difficult to meet an expectation for the isolation between the WiFi antennas and the NR antennas. Therefore, any antenna operating affects normal operations of other antennas, thereby degrading the efficiency of the antennas and impacting the performance of Over-The-Air (OTA) of the antennas.

The reasons for generating mutual interference include: (1) signal frequency bands or frequency points are the same or similar, such as WiFi and Bluetooth, WiFi and B41 and N41; (2) harmonic disturbance or intermodulation interference, for example, two harmonic waves or three harmonic waves operating in one mode fall into another frequency band to influence receiving of signals in the another frequency band; (3) spurious interference, for example, spurious signals generated during operating in one frequency band fall into a bandwidth range of another frequency band and thus cause mutual interference.

The mutual interference may have an impact on data services of the terminal. With weak signals of WiFi or NR, ultimate Total Isotropic Sensitivity (TIS) performance of WiFi and NR may be influenced by the mutual interference, resulting in an increased block error rate and degraded throughput performance for WiFi or NR, so that total throughput performance under a convergence of multi networks cannot reach an expectation, advantages of comprehensive throughput under the convergence of multi networks cannot be exerted, a service capability and a rate of an uplink line of a user are limited, and applications for data services depending on WiFi or NR cannot be normally used. The mutual interference may also have an impact on voice services. With weak signals of WiFi or NR, if WiFi generates interference on NR, the quality of signals in the network of NR is degraded, resulting in that 5G-based SMS messages cannot be received normally or VoNR calls cannot be answered normally. The impact of the mutual interference on both data services and voice services degrades the user experience.

Factors affecting mutual interference between WiFi and NR include: a distance, a position between the WiFi antenna and the NR antenna; maximum power and extreme sensitivity values of operating of WiFi and NR; operating frequencies, channels of WiFi and NR; gains of antennas for WiFi and NR; radiation directivity of WiFi and NR; conduction and antenna isolation between WiFi and NR; a relative angle between polarization directions of WiFi and NR antennas.

To avoid or eliminate the mutual interference between WiFi and NR, some related technologies adopt following schemes: (1) physical layouts of the WiFi antenna and the NR antenna are separated from each other, to reduce coupling degree bewteen the WiFi antenna and the NR antenna, however, due to a limited Printed Circuit Board (PCB) space in the terminal, physical positions of the WiFi antenna and the NR antenna cannot be completely isolated from each other; (2) a filter is added between WiFi and NR to filter out frequency ranges affecting each other, however, although the filter can filter out an influence in a level of a circuit board, the filter cannot completely avoid an influence of spatial coupling; (3) an enable control line is provided between WiFi and NR, so that the WiFi and the NR cannot operate simultaneously; (4) WiFi or NR power is backed off, so that the mutual interference is reduced by reducing the maximum transmitting power, however, reducing power of WiFi or NR sacrifices performance of WiFi and NR under weak signals; (5) WiFi and NR operate at different frequency points by limiting the frequency points, however, channels, frequency points, and frequency bands of WiFi are often relatively fixed, and cannot be dynamically switched and adjusted.

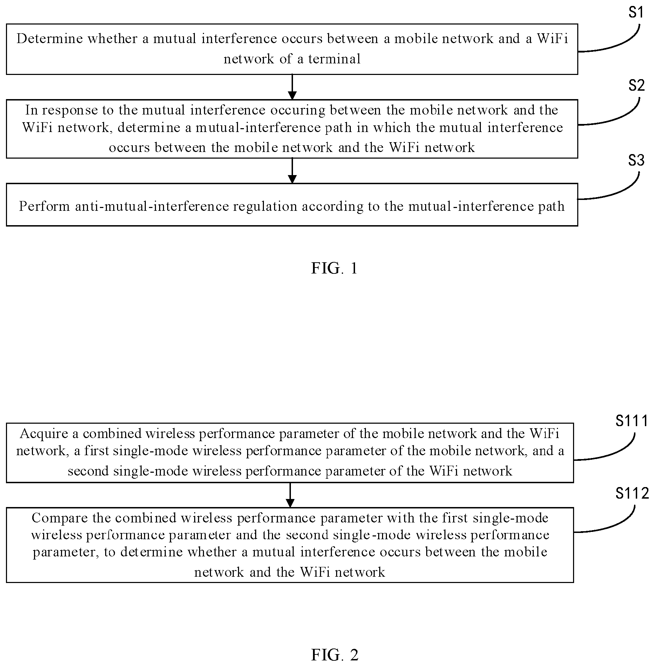

In a first aspect, referring to Fig. 1, an embodiment of the present disclosure provides an anti-mutual-interference regulation method for terminal networks, including following operations S1 to S3.

At operation S1, determining whether a mutual interference occurs between a mobile network and a WiFi network of a terminal.

At operation S2, in response to the mutual interference occurring between the mobile network and the WiFi network, determining a mutual-interference path in which the mutual interference occurs between the mobile network and the WiFi network.

At operation S3, performing an anti-mutual-interference regulation according to the mutual-interference path.

The mobile network is not particularly limited in the embodiments of the present disclosure. For example, the mobile network is a 5G network, and the 5G network may be represented by NR.

In the present disclosure, the mutual-interference path includes at least one of an antenna path, a conduction path. **In** some implementations, the mobile network corresponds to a plurality of antenna paths and a plurality of conduction paths, and the WiFi network also corresponds to a plurality of antenna paths and a plurality of conduction paths, and if any mutual interference occurs, not all the antenna paths and the conduction paths of the mobile network and the WiFi network interfere with each other, but one or more specific ones of the antenna paths or conduction paths in the mobile network may interfere with one or more specific ones of the antenna paths or conduction paths in the WiFi network, or one or more specific ones of the antenna paths or conduction paths in the WiFi network may interfere with one or more specific ones of the antenna paths or conduction paths in the mobile network. **In** the present disclosure, the specific antenna path or conduction path causing the mutual interference is to be determined by operation S2.

**In** the present disclosure, on the basis of the specific antenna path or conduction path causing the mutual interference being determined, through operation S3, anti-mutual interference regulation matching with the mutual interference can be specifically performed, which aims to reduce or eliminate the mutual interference between the WiFi network and the mobile network through adaptively switching or adjusting to a non-interference path in a case where the mutual interference occurs.

**In** the anti-mutual-interference regulation method for terminal networks in the present disclosure, the terminal can identify the mutual interference between the mobile network and the WiFi network, determine a specific path in which the mutual interference occurs, and further the anti-mutual-interference regulation is specifically performed, so that the mutual interference between the mobile network and the WiFi network can be reduced or eliminated, a throughput rate of the terminal under the convergence of multi networks is improved, and each frequency band of the WiFi network and the mobile network under the convergence of multi networks can be used for transmitting at a full uplink or downlink rate without interferences, which facilitates an improvement of communication quality under the convergence multi-network, and an improvement of the user experience.

How to determine whether a mutual interference occurs between the mobile network and the WiFi network is not limited particularly in the embodiments of the present disclosure.

In some implementations, whether the mutual interference occurs is determined based on an actual measurement for an existing network signaling.

Accordingly, in some implementations, referring to Fig. 2, the determining whether a mutual interference occurs between a mobile network and a WiFi network includes following operation S111 to S112.

At oepration S111, acquiring a combined wireless performance parameter of the mobile network and the WiFi network, a first single-mode wireless performance parameter of the mobile network, and a second single-mode wireless performance parameter of the WiFi network.

At oepration S112, comparing the combined wireless performance parameter with the first single-mode wireless performance parameter and the second single-mode wireless performance parameter, to determine whether a mutual interference occurs between the mobile network and the WiFi network.

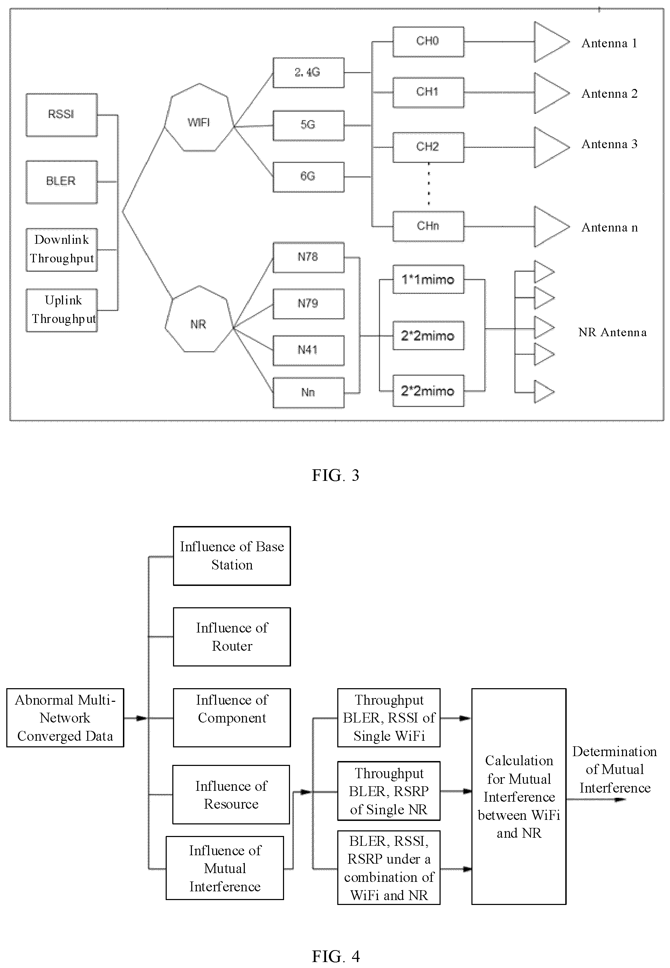

In the present disclosure, the combined wireless performance parameter, the first single-mode wireless performance parameter and the second single-mode wireless performance parameter are all wireless performance parameters. The combined wireless performance parameter, the first single-mode wireless performance parameter and the second single-mode wireless performance parameter are not particularly limited in the embodiments of the present disclosure. For example, the combined wireless performance parameter includes: a throughput rate, a block error rate (BLER), a Signal to Noise Ratio (SNR), and the like of uplink and downlink of WiFi and NR; the single-mode wireless performance parameter includes: a respective signal strength of WiFi or NR (e.g., Received Signal Strength Indication (RSSI), Reference Signal Receiving Power (RSRP)), a signal strength of each channel path, a throughput rate and a block error rate of each channel, a current frequency band and an usage of the WiFi antenna (e.g., 2.4G/5G/6G, 1×1MIMO/2×2MIMO/4×4MIMO/8×8MIMO), an usage of the NR antenna (e.g., 1×1MIMO/2×2MIMO/4×4MIMO), and the like. In some implementations, the acquisition of the wireless performance parameters under the convergence of multi networks is as shown in Fig. 3.

In the present disclosure, through operations S111 to S112, the factors causing the interference can be determined, so as to determine whether a mutual interference occurs between the WiFi network and the mobile network.

In some implementations, as shown in Fig. 4, in a case where there is any abnormality in converged data under the convergence of multi networks, whether the abnormality is caused by an influence of a base station, a router, a component, a resource, or by an influence of mutual interference can be determined. For example, if the the converged data indicate an abnormal throughput and a relative great BLER, a process of determining the mutual interference is started. For example, a throughput of single-mode WiFi, a throughput of single-mode NR, and a combined throughput of WiFi and NR are acquired; the combined throughput is compared with the throughput of single-mode WiFi and the throughput of single-mode NR; if the combined throughput is lower than the throughput of single-mode WiFi or the throughput of single-mode NR, it indicates that the mutual interference occurs; or a BLER of single-mode WiFi, a BLER of single-mode NR, a combined BLER of WiFi and NR are acquired; the combined BLER is compared with the BLER of single-mode WiFi or the BLER of single-mode NR; and if the combined BLER is higher than the BLER of single-mode WiFi or the BLER of single-mode NR, it indicates that the mutual interference occurs.

In some implementations, the terminal determines whether mutual interference occurs through a test of self-transmitting and self-receiving.

Accordingly, in some implementations, the determining whether a mutual interference occurs between a mobile network and a WiFi network includes: performing a test of self-transmitting and self-receiving by the mobile network and the WiFi network, to determine whether a mutual interference occurs between the mobile network and the WiFi network.

How to perform the test of self-transmitting and self-receiving is not particularly limited in the present disclosure.

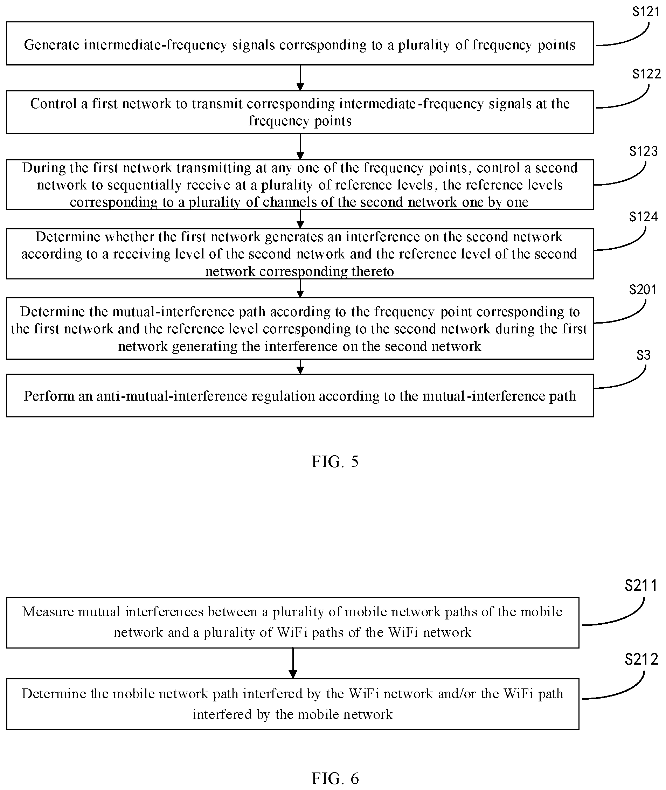

In some implementations, referring to Fig. 5, the performing a test of self-transmitting and self-receiving by the mobile network and the WiFi network, to determine whether a mutual interference occurs between the mobile network and the WiFi network includes following operations S121 to S124.

At operation S121, generating intermediate-frequency signals corresponding to a plurality of frequency points.

At operation S122, controlling a first network to transmit corresponding intermediate-frequency signals at the frequency points.

At operation S123, during the first network transmitting at any one of the frequency points, controlling a second network to sequentially receive at a plurality of reference levels, the reference levels corresponding to a plurality of channels of the second network one by one.

At operation S124, determining whether the first network generates an interference on the second network according to a receiving level of the second network and the reference level of the second network corresponding thereto.

The first network is one of the mobile network and the WiFi network, and the second network is the other of the mobile network and the WiFi network.

In the present disclosure, the first etwork refers to a network as an interference source, and the second network refers to an interfered network. In the present disclosure, the WiFi network may be regarded as an interference source, and the mobile network may be regarded as an interfered network, and the mobile network may also be regarded as an interference source, and the WiFi network may be regarded as an interfered network. During determing the mutual interference, a full-channel interference scan is performed on NR by using WiFi as the interference source; or a full-channel interference scan is performed on WiFi by using NR as the interference source.

In the present disclosure, through the test of self-transmitting and self-receiving, the mutual-interference path in which mutual interference occurs can also be determined.

Accordingly, in some implementations, referring to Fig. 5, the determining a mutual-interference path in which the mutual interference occurs between the mobile network and the WiFi network in response to the mutual interference occuring between the mobile network and the WiFi network includes following operation S201.

At operation S201, determining the mutual-interference path according to the frequency point corresponding to the first network and the reference level corresponding to the second network during the first network generating interference on the second network.

In some implementations, referring to Fig. 6, the determining a mutual-interference path in which the mutual interference occurs between the mobile network and the WiFi network includes following operations S211 to S212.

At operation S211, measuring mutual interferences between a plurality of mobile network paths of the mobile network and a plurality of WiFi paths of the WiFi network.

At operation S212, determining the mobile network path interfered by the WiFi network and/or the WiFi path interfered by the mobile network.

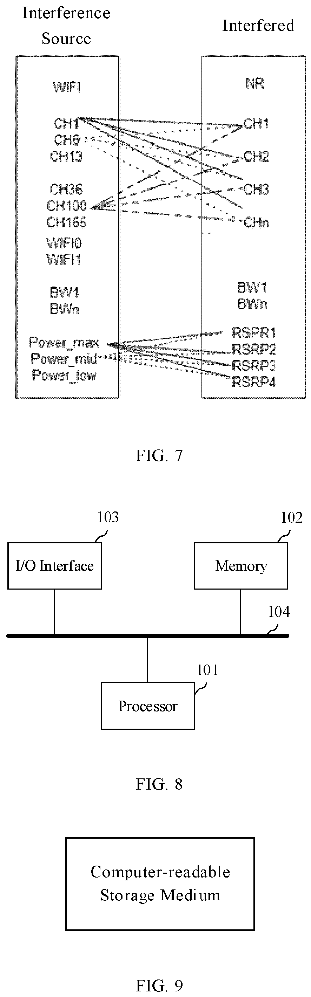

In the present disclosure, the measuring mutual interferences between a plurality of mobile network paths of the mobile network and a plurality of WiFi paths of the WiFi network may be performed by controlling one of the mobile network and the WiFi network to work at a certain channel, and simultaneously measuring interference on each channel of the other of the mobile network and the WiFi network. Taking controlling the WiFi network to work at a certain channel and measuring interference on each channel of NR as an example, as shown in Fig. 7, during a certain WiFi antenna transimitting, NR is controlled in a certain Receive (RX) mode of Primary Receive (PRX), Diversity Receive (DRX), PRX MIMO, or DRX MIMO, respectively, an acquired value of a converged parameter such as RSRP or Modulation and Coding Scheme (MCS) is measured and compared with an acquired value of the corresponding parameter in a case where there is no WiFi, whether the acquied value of the converged parameter is lower is determined; if the acquired value of the converged parameter is lower, it indicates that the interference occurs.

In some implementations, the performing an anti-mutual-interference regulation according to the mutual-interference path includes at least one of: reconstructing a WiFi path of the WiFi network according to the mutual-interference path; reconstructing a mobile network path of the mobile network according to the mutual-interference path; adjusting a length of a mobile network antenna and/or a length of a WiFi antenna in the terminal according to the mutual-interference path; adjusting a position of a signal feed point and/or a position of a ground feed point in the terminal according to the mutual-interference path; adjusting a tank circuit of a mobile network antenna and/or a tank circuit of a WiFi antenna according to the mutual-interference path; adjusting a radiation direction of a mobile network antenna and/or a radiation direction of a WiFi antenna according to the mutual-interference path; adjusting a conformation of a mobile network antenna and/or a conformation of a WiFi antenna according to the mutual-interference path.

In some implementations, the terminal includes a plurality of WiFi antennas which are interconnected through a first switch; the reconstructing a WiFi path of the WiFi network according to the mutual-interference path includes: controlling the first switch according to the mutual-interference path, to adjust an interconnection state of the plurality of WiFi antennas, so as to obtain a WiFi path bypassing the mutual-interference path.

**In** some implementations, the terminal includes a plurality of WiFi front-end modules which are connected with a WiFi chip through a second switch, and the plurality of WiFi front-end modules are inter-communicable; the reconstructing a WiFi path of the WiFi network according to the mutual-interference path includes: controlling the second switch according to the mutual-interference path, to adjust an intercommunication state of the plurality of WiFi front-end modules, so as to obtain a WiFi path bypassing the mutual-interference path.

**In** some implementations, the terminal includes a plurality of mobile network antennas which are interconnected through a third switch; the reconstructing a mobile network path of the mobile network according to the mutual-interference path includes: controlling the third switch according to the mutual-interference path, to adjust an interconnection state of the plurality of mobile network antennas, so as to obtain a mobile network path bypassing the mutual-interference path.

In some implementations, the terminal includes a plurality of mobile network front-end modules which are connected with a radio frequency chip through a fourth switch, and the plurality of mobile network front-end modules are inter-communicable; the reconstructing a mobile network path of the mobile network according to the mutual-interference path includes: controlling the fourth switch according to the mutual-interference path, to adjust an intercommunication state of the plurality of mobile network front end modules, so as to obtain a mobile network path bypassing the mutual-interference path.

In some implementations, the terminal includes a plurality of WiFi antennas which are interconnected through a fifth switch, the terminal includes a plurality of mobile network antennas which are interconnected through a sixth switch; the adjusting a length of a mobile network antenna and/or a length of a WiFi antenna in the terminal according to the mutual-interference path includes: controlling the fifth switch according to the mutual-interference path, to adjust an interconnection state of the plurality of WiFi antennas to change the length of the WiFi antenna in the terminal; and/or controlling the sixth switch according to the mutual-interference path, to adjust an interconnection state of the plurality of mobile network antennas to change the length of the mobile network antenna in the terminal.

In some implementations, the terminal includes a plurality of signal feed points and/or a plurality of ground feed points; the adjusting a position of a signal feed point and/or a position of a ground feed point in the terminal according to the mutual-interference path includes: selecting a target signal feed point and/or a target ground feed point according to the mutual-interference path, the target signal feed point being the signal feed point for reducing the mutual interference in the plurality of signal feed points, and the target ground feed point being the ground feed point for reducing the mutual interference in the plurality of ground feed points.

In some implementations, the adjusting a tank circuit of a mobile network antenna and/or a tank circuit of a WiFi antenna according to the mutual-interference path includes: adjusting a direction of the tank circuit of the mobile network antenna and/or a direction of the tank circuit of the WiFi antenna according to the mutual-interference path.

In some implementations, the adjusting a tank circuit of a mobile network antenna and/or a tank circuit of a WiFi antenna according to the mutual-interference path includes: adjusting an area of the tank circuit of the mobile network antenna and/or an area of the tank circuit of the WiFi antenna according to the mutual-interference path.

In some implementations, the adjusting a tank circuit of a mobile network antenna and/or a tank circuit of a WiFi antenna according to the mutual-interference path further includes: adjusting an antenna matching circuit and/or a tuning circuit, following an adjustment of the area of the tank circuit of the mobile network antenna and/or the area of the tank circuit of the WiFi antenna.

In some implementations, the adjusting a radiation direction of a mobile network antenna and/or a radiation direction of a WiFi antenna according to the mutual-interference path includes: determining a mutual-interference direction (i.e., in which the mutual interference occurs) according to the mutual-interference path; and adjusting the radiation direction of the mobile network antenna and/or the radiation direction of the WiFi antenna according to the mutual-interference direction.

In some implementations, the adjusting the radiation direction of the mobile network antenna and/or the radiation direction of the WiFi antenna according to the mutual-interference direction includes at least one of: adding a matching network component for changing a radiation pattern on ground feed points of the mobile network antenna and the WiFi antenna; adding a decoupling filtering network component for changing a radiation pattern on ground feed points of the mobile network antenna and the WiFi antenna; adding a branch for changing a radiation pattern on ground feed points of the mobile network antenna and the WiFi antenna.

In some implementations, the terminal includes multiple mobile network antennas and/or multiple WiFi antennas; the adjusting a conformation of the mobile network antenna and/or a conformation of the WiFi antenna according to the mutual-interference path includes: adjusting a connection between the multiple mobile network antennas to obtain a combination of mobile network antennas, so as to adjust the conformation of the mobile network antenna; and/or adjusting a connection between the multiple WiFi antennas to obtain a combination of WiFi antennas, so as to adjust the conformation of the WiFi antenna.

In some implementations, multiple antennas are selected from at least one of a monopole antenna, a slot antenna, an Inverted-F antenna (IFA), a Planar Inverted-F Antenna (PIFA), a LOOP antenna, or a metal-bezel antenna.

In a second aspect, referring to Fig. 8, an embodiment of the present disclosure provides a terminal, including: at least one processor 101; a memory 102 having at least one computer program stored thereon, the at least one computer program, executed by the at least one processor, causes the at least one processor to implement the anti-mutual-interference regulation method for terminal networks as described in the first aspect of the present disclosure; at least one I/O interface 103 connected between the processor and the memory and configured to implement information interaction between the processor and the memory.

In some implementations, the processor 101 is a device having a capability of processing data, includes, but is not limited to, a Central Processing Unit (CPU), and the like; the memory 102 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface (read/write interface) 103 is connected between the processor 101 and the memory 102, enables to implement information interaction between the processor 101 and the memory 102, and includes, but is not limited to, a data Bus, and the like.

In some implementations, the processor 101, the memory 102, and the I/O interface 103 are connected together through a bus 104, and are further connected to other components of a computing device.

In a third aspect, referring to Fig. 9, an embodiment of the present disclosure provides a computer-readable storage medium having a computer program stored thereon, the computer program, executed by a processor, causes the processor to implement the anti-mutual-interference regulation method for terminal networks as described in the first aspect of the present disclosure.

In order to enable those skilled in the art to more clearly understand the technical solutions provided in the embodiments of the present disclosure, the technical solutions provided in the embodiments of the present disclosure are described in detail below by specific examples.

### Example 1

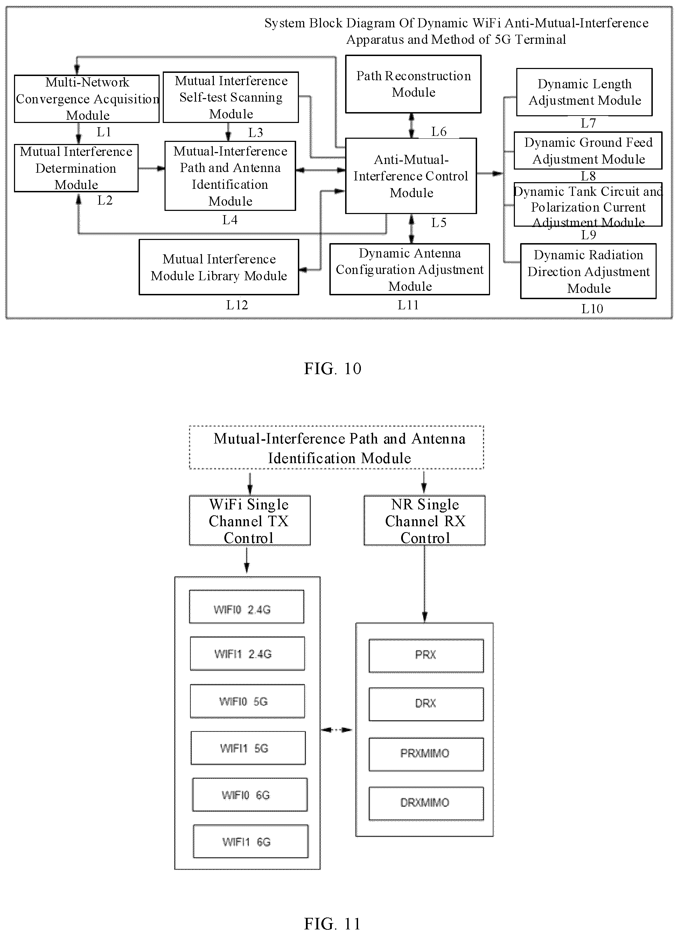

Fig. 10 is a schematic diagram of a system configuration in the present example.

As shown in Fig. 10, a mobile terminal includes a multi-network convergence acquisition module L1, an mutual interference determination module L2, an mutual interference self-test scanning module L3, an mutual-interference path and antenna identification module L4, an anti-mutual-interference control module L5, a path reconstruction module L6, a dynamic length adjustment module L7, a dynamic ground feed adjustment module L8, a dynamic tank circuit and polarization current adjustment module L9, a dynamic radiation direction adjustment module L10, a dynamic antenna conformation adjustment module L11, and an mutual interference module library module L12.

The multi-network convergence acquisition module L1 is connected with the mutual interference determination module L2 and the anti-mutual-interference control module L5, and is configured to acquire a wireless performance parameter of the terminal under the convergence of multi networks including WiFi 2.4G/5G/6G and NR. The wireless performance parameter includes: a throughput rate, BLER, SNR, and the like of uplink and downlink of WiFi and NR; a respective signal strength of WiFi or NR (e.g., RSSI, RSRP), a signal strength of each channel path, a throughput rate and BLER of each channel, a current frequency band and an usage of the WiFi antenna (e.g., 2.4G/5G/6G, 1×1MIMO/2×2MIMO/4×4MIMO/8×8MIMO), an usage of the NR antenna (e.g., 1×1MIMO/2×2MIMO/4×4MIMO), and the like. The acquisition of the wireless performance parameter under the convergence of multi networks is as shown in Fig. 3.

Values of an antenna state and a signal quality state may be acquired in real time through a mobile phone baseband chip, and a WiFi chip and an NR chip connected with the mobile phone baseband chip. The antenna state includes acquired values of CH0/CH1/CHn and antenna states of a plurality of MIMO paths.

The mutual interference determination module L2 is connected with the multi-network convergence acquisition module L1 and the mutual-interference path and antenna identification module L4, and is configured to determine a factor causing the mutual interference, i.e., determine whether the mutual interference is caused by a network factor of a base station, a factor of a router, an interference of a component, or a related influence between NR and WiFi.

If the multi-network convergence acquisition module acquires an abnormal throughput and a relatively great BLER is generated, a process of determining the mutual interference is started. For example, throughputs of single-mode WiFi and single-mode NR are detected, and are compared with a combined throughput of WiFi and NR; if the combined throughput is lower, it indicates that the mutual interference occurs; or BLERs of single-mode WiFi and single-mode NR are detected, and compared with a combined BLER of WiFi and NR; if the combined BLER is greater, it indicates that the mutual interference occurs.

The mutual interference self-test scanning module L3 is connected with the mutual-interference path and antenna identification module L4 and the anti-mutual-interference control module L5, and is configured to implement a test of self-transmitting and self-receiving. The mutual interference determination module L2 determines whether the mutual interference occurs through an actual measurement for an existing network signaling, which depends on a router and a base station connected thereto, and is to establish a signaling connection to implement real-time monitoring. The mutual interference self-test scanning module L3 can realize a detection and an identification of a mutual-interference signal through self-transmitting and self-receiving of the 5G terminal without depending on other devices.

A process of self-testing the mutual interference includes that a basic level signal is input into a front end of a mobile phone by a self-adaptive sensing control module, the mobile phone obtains an intermediate-frequency signal of a corresponding frequency band after the basic level signal is subjected to band-pass filtering, amplified by a Low Noise Amplifier (LNA), and mixed by a variable frequency oscillator, and the intermediate-frequency signal enters a variable gain amplifier after being subjected to post-filtering and an AD conversion and reaches a receiving level calculating and reporting module. By continuously adjusting a local oscillation frequency, different intermediate-frequency signals are obtained and then a value of a receiving level of each frequency point is collected. After the mutual interference self-test scanning module L3 is started, the module L3 controls the mobile phone to enter a mutual-interference self-scanning mode of scanning the mutual interference between WiFi and NR.

In some implementations, through the proces of self-testing the mutual interference, a transmitter and a receiver of the radio frequency chip of the 5G terminal are controlled to enter an interference mutual-scanning mode, so that the mobile phone is switched to a mode of WiFi and NR being simultaneously operating, to perform a loop frequency scanning of self-transmitting and self-receiving at a specific operating frequency band, a specific bandwidth and a specific frequency point.

In Fig. 11, WiFi0 and WiFi1 represent two channels for each frequency band. As shown in Fig. 11, if WiFi generates interference on NR, a control process includes following oeprations.
(1) WiFi is controlled to be an interference source, and NR is interfered.
(2) A WiFi signal is controlled to be transmitted at a maximum power, and the NR is controlled to receive the WiFi signal at a preset reference level.
(3) WiFi is set to transmit at a bandwidth Wn, a frequency point Fn and a channel CHn, and a full-channel RX interference scan is performed on NR.
(4) The power of transmitting the WiFi signal is reduced by a certain power step Pstep, and a full-channel scan is performed on NR.
(5) The WiFi power transmitting scan is stopped until no interference is detected in the NR signal.
(6) An interference frequency point and an interference power value are stored.

If the NR generates interference on the WiFi, a control process includes following oeprations.
(1) NR is controlled to be an interference source, and WiFi is interfered.
(2) An NR signal is controlled to be transmitted at a maximum power, and the WiFi is controlled to receive the NR signal at a preset reference level.
(3) NR is set to transmit at a bandwidth Wn, a frequency point Fn and a channel CHn, and a full-channel RX interference scan is performed on WiFi.
(4) The power of transmitting the NR signal is reduced by a certain power step Pstep, and a full-channel scan is performed on WiFi.
(5) The NR power transmitting scan is stopped until no interference is detected in the WiFi signal.
(6) An interference frequency point and an interference power value are stored.

The mutual-interference path and antenna identification module L4 is connected with the mutual interference determination module L2, the mutual interference self-test scanning module L3 and the anti-mutual-interference control module L5, and is configured to identify and determine a conduction path or an antenna path generating interference by testing a throughput and a block error rate of each path and comparing them with a throughput and a block error rate of each path in a frequency band without a mutual interference.
if the mutual interference occurs between WiFi and NR in the terminal, the WiFi includes 2.4G and 5G, 6G, and at least two antennas, such as CH0 and CH1, and the NR also includes two or four antennas, the mutual interference not occurs between all the WiFi antennas and the NR antennas, and generally, a certain antenna or path interferes with another antenna or path. Therefore, a specific antenna or path that generats interferrence or is interfered is to be identified.

A certain channel of the WiFi network being controlled to operate to test interference on each channel of the NR is taken as an example, as shown in Fig. 7. In Fig. 7, a plurality of WiFi antennas are denoted CH1, CH6, CH13, CH36, CH 100; a plurality of channels of NR are denoted CH1, CH2, ..., CHn. The transmission power of WiFi corresponds to a plurality of levels including a maximum transmission power (Power_max), a medium transmission power (Power_mid), a minimum transmission power (Power_low). If a certain WiFi antenna transmits signals, NR is controlled in a certain RX mode of PRX, DRX, PRX MIMO and DRX MIMO respectively, to test an acquired value of a converged parameter such as RSRP or MCS and compare it with a corresponding acquired value in a case where there is no WiFi, and determine whether the acquired value of the converged parameter is lowerer; if the acquired value of the converged parameter is lower, it indicates that the interference occurs.

The anti-mutual-interference control module L5 is connected with the path reconstruction module L6, the mutual interference module library module L12, and each of anti-mutual-interference adjustment modules L7 to L11, and is configured to call a targeted and matched anti-mutual-interference regulation circuit and method by detecting different mutual-interference scenes and mutual-interference identification characteristic parameters.

The present Example provides multiple WiFi-NR anti-mutual-interference regulation schemes, which may be used individually, or simultaneously at least partially, and are mainly divided into following parts.
(1) Dynamic length adjustment: if an antenna length is adjustable, by changing the antenna length of WiFi or NR to change a radiation direction, mutual coupling, a current distribution and the like, to realize the anti-mutual-interference regulation.
(2) Dynamic ground feed adjustment: if the antenna length is not variable, and a signal feed point or a ground feed point is adjustable, an optimal or desired position of the feed point with a relaltively small coupling is to be selected through an adjustment of a position of the signal feed point or the ground feed point, to reduce mutual interference between antennas of WiFi and NR.
(3) Dynamic tank circuit adjustment: by changing shapes of tank circuits on a surface of a metal antenna, a slot antenna, an IFA, a PIFA of WiFi and NR, to change an original flowing direction of a current in the antennas, so as to reduce the mutual interference between antennas of WiFi and NR, which may also be called dynamic current adjustment, for example, if one of a WiFi antenna or an NR antenna is an IFA or a PIFA, or a slot antenna, by changing local wiring or a shape of metal copper of the antenna, a new coupling current path is introduced, a path for cancelling a coupling current is added, and an original coupling current path is changed, so that an isolation is improved and the mutual interference is reduced. That is, mutual coupling is reduced by changing a current distribution on a surface of the antenna.
(4) Dynamic polarization current adjustment: if the mutual interference is caused due to a same or similar polarization direction of the WiFi antenna and the NR antenna, by changing a relative position or conformations of the WiFi antenna and the NR antenna, to change polarization directions of the WiFi antenna and the NR antenna to form be orthogonal, so as to reduce the mutual interference.
(5) Dynamic radiation direction adjustment: if the mutual interference has a strong directivity, i.e., the interference mainly occurs in a certain direction, and interference in other directions is reltively weak, by adjusting a filtering network on a ground feed point or changing a position relation between two antennas, to change a radiation direction of one or two antennas, so as to reduce the mutual interference.
(6) Dynamic antenna conformation adjustment: if a certain antenna conformation results in a relatively great interference and a single antenna conformation cannot avoid the mutual interference, the dynamic antenna conformation adjustment may be used to enable WiFi antennas and NR antennas on a mobile phone to form a plurality of parasitic and branch joints, and a monopole antenna, a slot antenna, an IFA, a PIFA, a LOOP antenna and a metal-bezel antenna are connected in series or in parallel through a specific circuit, a switch, a metal short-circuit sheet and the like to form a combination of a plurality of antennas, so as to change the mutual interference between the WiFi antenna and the NR antenna. For example, if the WiFi antenna or the NR antenna of the mobile phone is a metal slot antenna, and a strong mutual interference is found, the antenna conformation may be adjusted by turning on and off a circuit, for example, so that the slot antenna is changed into the LOOP antenna, since a current path of the LOOP antenna is closed, and can enables a current to flow back through a closed LOOP, a strong anti-interference performance can be achieved.

The path reconstruction module L6 is connected to the anti-mutual-interference control module L5, and is configured to reconstruct a radio frequency conduction path or an antenna path of WiFi and NR, so as to avoid the mutual interference between such two modes.

In WiFi 6 or WiFi 7, since WiFi has 2N antennas, the antennas are distributed in different directions, different positions and at different angles of the terminal. Meanwhile, there are 2/4/6/8 or more WiFi Front-End Modules (FEMs) in 2.4G/5G/6G, and the antennas are connected to a WiFi main chip through the FEMs, to form different WiFi conduction paths and antenna paths.

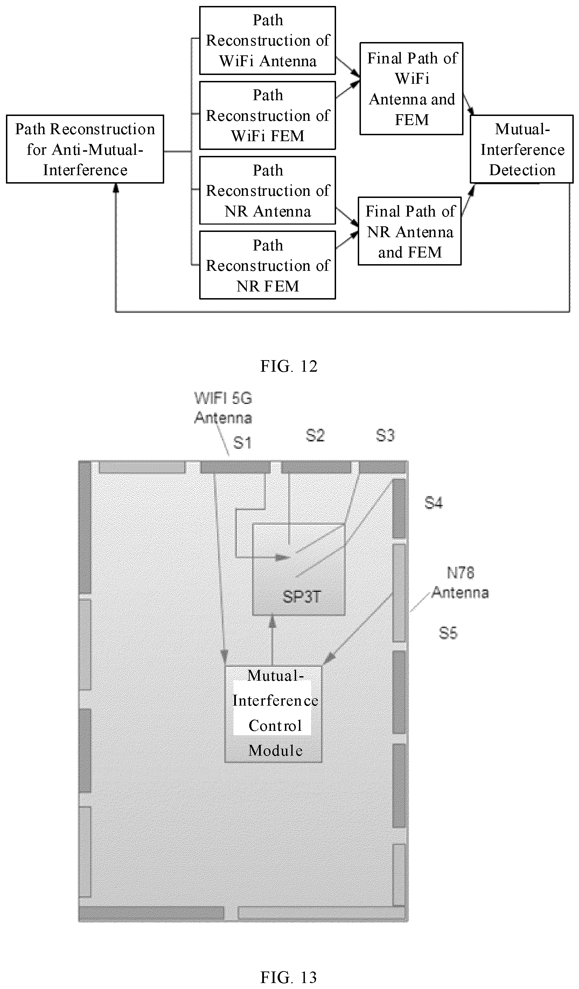

The path reconstruction of WiFi and NR for anti-mutual-interference includes a reconstruction of a conduction path and a reconstruction of an antenna radiation path, the conduction path is from an end of the WiFi chip to the FEMs, and the antenna radiation path is from the FEMs to the WiFi antennas. The reconstruction of the WiFi-NR mutual-interference path is as shown in Fig. 12, and may be divided into following three parts including a first part, a second part and a third part.

The first part is a reconstruction of WiFi antennas for anti-mutual-interference, 2N antennas are distributed on top, bottom, left, and right sides of the mobile phone, each WiFi antenna corresponds to one WiFi frequency band and one channel, in a traditional scheme, each antenna is relatively independent, but herein, different WiFi antennas are interconnected through a multi-input multi-output switch to form different links for switching and intercommunicating, so as to impelment switching of an antenna path.

The second part is a reconstruction of WiFi FEMs for anti-mutual interference, WiFi containa a plurality of MIMO channels, each channel originally corresponds to one FEM including a Power Amplifier (PA) and an LNA, certainly, may correspond to one of PA/LNA, or correspond to an FEM only including a filter and a switch but not including PA/LNA, the WiFi antenna is connected with the WiFi chip through the FEM, which are in a correspondence one-to-one in a traditional scheme, but herein, through a multi-input multi-output switch, such as DPDT, 3P3T, 4P4T, inputs of FEMs and TX/RX output ports of the WiFi chip are connected to achieve an intercommunication state, and each FEM corresponds to one antenna, thus intercommunication and switching between antennas in different directions and positions can be realized.

The third part is a reconstruction of NR front-end RF and antenna path for anti-mutual-interference, an NR signal is transmitted from a RF chip and is finally transmitted to an NR main transmitting antenna after passing through a PA, a Single Pole Double Throw (SPDT) switch, an NR filter, a coupler, an X-band Antenna Switch (XSW), a Diplexer/Triplexer. The terminal receives a signal transmitted by a base station through a main receiving antenna, and the signal sequentially passes through a frequency divider, an XSW switch, an NR filter, an LNA and finally reaches the RF chip, the XSW switch includes a DPDT switch, a 3P3T switch or a 4P4T switch. Taking N78 as an example, there are four paths of PRX/DRX/PRX MIMO/DRX MIMO, which correspond to four antennas ANT1, ANT2, ANT3, and ANT4, and in an actual operation process, the paths may be switched therebetween according to an interference situation, so as to bypass the radio frequency or antenna path with an interference.

The dynamic length adjustment module L7 is connected with the anti-mutual-interference control module L5, and is configured to implement an anti-mutual-interference regulation based on a dynamic length adjustment. If interference between WiFi and NR is detected, such as the interference generated by the WiFi on the NR is detected, an interfering capability of mutual-interference may be reduced by changing a length of the WiFi antenna,or a degree of coupling of the WiFi on the NR may be reduced by changing a length of the NR antenna.

As shown in Fig. 13, S1 is a WiFi 5G antenna, S5 has an N78 antenna, if mutual interference occurs between WiFi and N78, S1 may be expanded to S2, S3, S4 through a switch. The mutual-interference control module detects the mutual interference between the WiFi 5G antenna and the N78 antenna in real time, and if interference occurs, the mutual-interference control module controls the SPNT switch to expand the S1 to such as S2 and S3, and by changing a length of the antenna, a radiation direction and a flow direction of a surface current, mutual coupling between the WiFi 5G antenna and the N78 antenna is reduced.

As shown in Fig. 13, S1 is a WiFi 5G antenna, S5 has an N78 antenna, if mutual interference occurs between WiFi and N78, S1 may be expanded to S2, S3, S4 through a switch. The mutual-interference control module detects the mutual interference between the WiFi 5G antenna and the N78 antenna in real time, and if interference occurs, the mutual-interference control module controls the SPNT switch to expand the S1, to such as S1S2, S1S3 and S1S4, and by changing a length of the antenna, a radiation direction and a flow direction of a surface current, the mutual coupling between the WiFi 5G antenna and the N78 antenna is reduced.

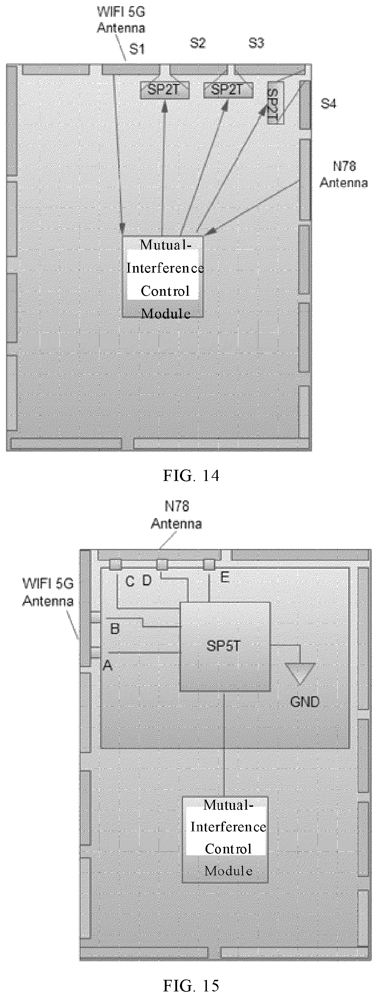

In addition, as shown in Fig. 14, S1 may also be expanded to S1S2, S1S2S3, S1S2S3S4 through a plurality of SP2T switches, and by changing a length of the antenna, a radiation direction and a flow direction of a surface current, the mutual coupling between the WiFi 5G antenna and the N78 antenna is reduced.

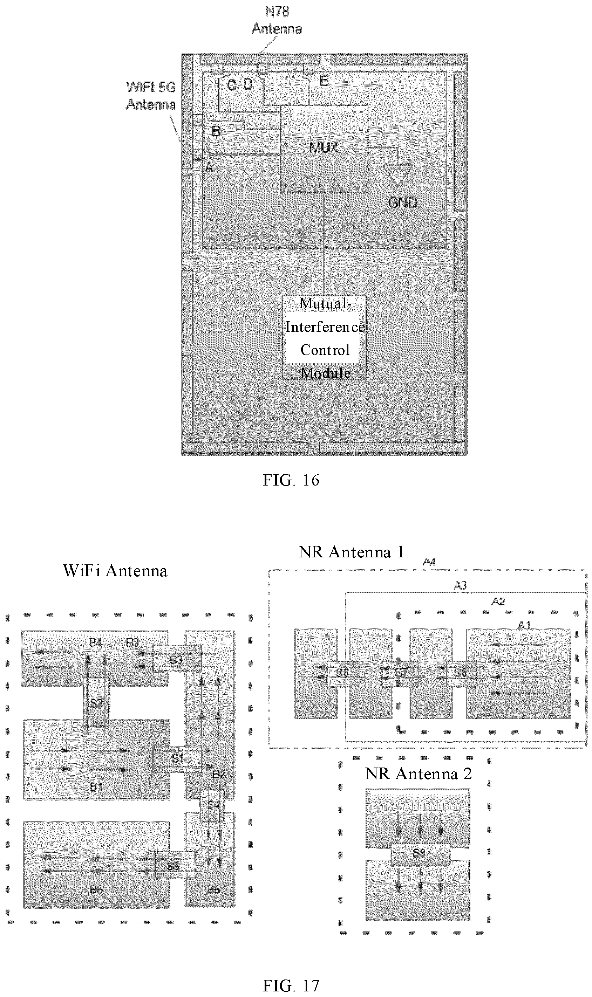

The dynamic ground feed adjustment module L8 is connected with the anti-mutual-interference control module L5, and is configured to implement the dynamic ground feed adjustment for anti-mutual-interference. As shown in Figs. 15 and 16, a plurality of grounding points A, B, C, D, E are added between a metal bezel and a motherboard substrate. Fig. 15 shows the dynamic ground feed adjustment through a SP5T switch, and Fig. 16 shows the dynamic ground feed adjustment through a Multiplexer (MUX).

The dynamic tank circuit and polarization current adjustment module L9 is connected with the anti-mutual-interference control module L5, and is configured to implement a dynamic tank circuit adjustment or a polarization current adjustment for anti-mutual-interference. By changing shapes of tank circuits on surfaces of a metal antenna, a slot antenna, an IFA, a PIFA, of WiFi and NR, an original flowing direction of an antenna current is changed, and the mutual interference between WiFi and NR is reduced, which may also be called a dynamic current adjustment, for example, if one of the WiFi antenna or the NR antenna is an IFA or a PIFA, or a slot antenna, by changing local wiring or a shape of metal copper of the antenna, a new coupling current path is introduced, a path for cancelling a coupling current is added, and an original coupling current path is changed, so that an isolation is improved and the mutual interference is reduced. That is, mutual coupling is reduced by changing a current distribution on a surface of the antenna.

Fig. 17 is taken as an example, following two operation modes are possible.

In a first mode, if a WiFi antenna has a strong interference on an NR antenna 1 or an NR antenna 2, by turning on and off switches S1 to S5, a shape of a tank circuit of the WiFi antenna is changed, thereby changing a flow direction of a current.

The principle of the first mode is that, if the mutual interference occurs between the NR antenna 1 or 2 and the WiFi antenna, a direction of the tank circuit is changed through switches, to enable that a polarization direction of a surface current of the WiFi antenna is orthogonal to a polarization direction of a current of the NR antenna 1 or 2, thereby avoiding parallelism therebetween to reduce mutual coupling. If it is determined that the interference is currently introduced by the NR antenna 1, an available WiFi antenna path is selected to be B1B2, B1B2B6, or B1B4; if it is determined that the interference is currently introduced by the NR antenna 2, the available WiFi antenna path is selected to be B1, B1B2B3B4 or B1B2B5B6, the paths mentioned above are formed into a mapping table, and according to a specific interfering antenna and scene, the control module selects an optimal or desired adjusted path.

In a second mode, for two antennas with the mutual interference therebetween, a length of an LDS or metal antenna may be changed by turning on and off the tank circuit, so that the interference is reduced. If the NR antenna 1 is originally an A4 antenna and has a strong interference on WiFi, the NR antenna 1 may be changed into an A3 antenna by turning off a switch S8, and if the A3 antenna also has an interference, the NR antenna 1 may be further rolled back into an A2 antenna or an A1 antenna, and in this process, an antenna matching or tuning circuit may be accordingly adjusted to avoid a frequency offset of the NR antenna, and in this second mode, an area of the tank circuit of the antenna is reduced, thereby reducing the interference on WiFi.

The dynamic radiation direction adjustment module L10 is connected with the anti-mutual-interference control module L5, and is configured to implement a dynamic anti-mutual-interference regulation based on a radiation direction (i.e., the dynamic radiation direction adjustment). The dynamic radiation direction adjustment is that, if the mutual interference has a strong directivity, i.e., the interference mainly occurs in a certain direction, and no interference occurs in other directions, it is determined that the interference is caused by mutual coupling due to an influence of a radiation direction, and in this case, a radiation pattern of one or two antennas may be changed to reduce the mutual interference.

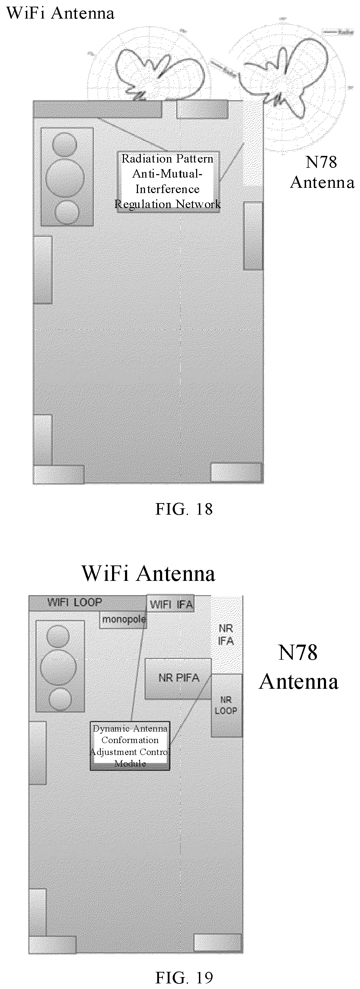

The adjustment may be performed by: if the mutual interference between the WiFi antenna and the NR antenna is detected, adding a matching network component or a decoupling filtering network component for changing a radiation pattern on ground feed points of these two antennas, or adding a branch for changing a radiation pattern, for example, on a metal bezel of a terminal, to divide a direction of the antenna into different sections and segments through a slot. Each of the sections corresponds to one antenna direction, a lower left section corresponds to a lower left direction, and an upper right section corresponds to an upper right direction. A variable component for changing the radiation pattern may adjust a radiation direction of the radiation pattern on the ground feed point through an SP4T tuning switch, an MEMS tuning switch; or a matching network component and a decoupling filtering network component may be adopted on a main signal feed point path, and through different on and off of architectures and varying of values of a resistance, a capacitance and an inductance, a radiation direction of the radiation pattern with a variable maximum gain direction is adjusted. The dynamic radiation pattern adjustment for WiFi-NR anti-mutual-interference is as shown in Fig. 18.

The dynamic antenna conformation adjustment module L11 is connected with the anti-mutual-interference control module L5, and is configured to implement anti-mutual-interference regulation based on a dynamic antenna conformation. Following dynamic antenna conformation adjustment may be employed, that is, if a certain antenna conformation has a relatively great interference and a single antenna conformation cannot avoid the mutual interference, the dynamic antenna conformation adjustment may be used to enable WiFi antennas and NR antennas on a mobile phone to form a plurality of parasitic and branch joints, and a monopole antenna, a slot antenna, an IFA, a PIFA, a LOOP antenna and a metal-bezel antenna are connected in series or in parallel through a specific circuit, a switch, a metal short-circuit sheet and the like to form a combination of a plurality of antennas, so as to change the mutual interference between the WiFi antenna and the NR antenna.

For example, if the WiFi antenna or the NR antenna of the mobile phone is a metal slot antenna, and a strong mutual interference is found, the antenna conformation may be adjusted by turning on and off a circuit, for example, to change the slot antenna into the LOOP antenna, since a current path of the LOOP antenna is closed, and can enables a current to flow back through a closed LOOP, a strong anti-interference performance can be achieved. The dynamic antenna conformation adjustment for WiFi-NR anti-mutual-interference is as shown in Fig. 19.

### Example 2

In the example, an operation flow of a 5G terminal for dynamic WiFi anti-mutual-interference includes following operations.

After a system of the terminal starts a regulation mode, a control module controls the 5G terminal to enter into an operation state of a WiFi dynamic anti-mutual-interference regulation.

The terminal acquires a wireless performance parameter under the convergence of multi networks including WiFi 2.4G/5G/6G and NR.

If any network performance under the convergence of WiFi-NR multi networks does not satisfy an expectation based on a threshold, a mutual-interference factor is to be determined.

The mutual-interference path and antenna identification module identifies a conduction path or an antenna path generating the interference.

The anti-mutual-interference control module detects different mutual-interference scenes and mutual-interference identification characteristic parameters, and calls a targeted and matched anti-mutual-interference regulation circuit and method.

The control module performs a direction mapping calculation according to different detection results and selects an optimal or desired control and adjustment scheme.

If the interference is related to a radio frequency conduction path or an antenna path of WiFi and NR, the path reconstruction module is started to implement the anti-mutual-interference regulation.

If the length of the antenna is adjustable, the dynamic length adjustment module is to be started to implement the anti-mutual-interference regulation.

If the signal feed point or the ground feed point of the antenna is adjustable, the dynamic ground feed adjustment module is to be started to implement the anti-mutual interference regulation.

If the mutual interference is caused by a polarization current, the dynamic tank circuit and polarization current adjustment module is to be started to implement the anti-mutual interference regulation.

If the mutual interference is caused by a radiation direction, the dynamic radiation direction adjustment module is to be started to implement the anti-mutual interference regulation.

If the mutual interference is caused by an antenna conformation, the dynamic antenna conformation adjustment module is to be started to implement the mutual interference resistance adjustment.

An anti-mutual-interference apparatus for anti-mutual-interference under the convergence of multi networks dynamically detects a condition of throughput in real time, and uses a combination of one or more of adjustments described above in real time, until the performance of the device under the convergence of multi networks satisfies the expectation based on the threshold all the time.

It should be understood by those of ordinary skill in the art that all or some of the operations in the method described above, or all or some of the functional modules/components in the system or apparatus described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present disclosure discloses the exemplary embodiments, and although specific terms are employed, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present dislcosure as set forth in the appended claims.

## Claims

1. An anti-mutual-interference regulation method for terminal networks, comprising:
determining whether a mutual interference occurs between a mobile network and a WiFi network of a terminal;
in response to the mutual interference occurring between the mobile network and the WiFi network, determining a mutual-interference path in which the mutual interference occurs between the mobile network and the WiFi network;
performing an anti-mutual-interference regulation according to the mutual-interference path.

2. The method of claim 1, wherein the determining whether a mutual interference occurs between a mobile network and a WiFi network comprises:
acquiring a combined wireless performance parameter of the mobile network and the WiFi network, a first single-mode wireless performance parameter of the mobile network, and a second single-mode wireless performance parameter of the WiFi network; and
comparing the combined wireless performance parameter with the first single-mode wireless performance parameter and the second single-mode wireless performance parameter, to determine whether a mutual interference occurs between the mobile network and the WiFi network.

3. The method of claim 1 or 2, wherein the determining whether a mutual interference occurs between a mobile network and a WiFi network comprises:
performing a test of self-transmitting and self-receiving by the mobile network and the WiFi network, to determine whether mutual interference occurs between the mobile network and the WiFi network.

4. The method of claim 3, wherein the performing a test of self-transmitting and self-receiving by the mobile network and the WiFi network, to determine whether mutual interference occurs between the mobile network and the WiFi network comprises:
generating intermediate-frequency signals corresponding to a plurality of frequency points;
controlling a first network to transmit corresponding intermediate-frequency signals at the frequency points;
during the first network transmitting at any one of the frequency points, controlling a second network to sequentially receive at a plurality of reference levels, the reference levels corresponding to a plurality of channels of the second network one by one;
determining whether the first network generates an interference on the second network according to a receiving level of the second network and the reference level of the second network corresponding thereto,
wherein the first network is one of the mobile network and the WiFi network, and the second network is another one of the mobile network and the WiFi network.

5. The method of claim 4, wherein the determining a mutual-interference path in which the mutual interference occurs between the mobile network and the WiFi network in response to the mutual interference occurring between the mobile network and the WiFi network comprises:
determining the mutual-interference path according to the frequency point corresponding to the first network and the reference level corresponding to the second network during the first network generating the interference on the second network.

6. The method of claim 1, wherein the determining a mutual-interference path in which the mutual interference occurs between the mobile network and the WiFi network comprises:
measuring a mutual interference between a plurality of mobile network paths of the mobile network and a plurality of WiFi paths of the WiFi network;
determining the mobile network path interfered by the WiFi network and/or the WiFi path interfered by the mobile network.

7. The method of claim 1, wherein the performing an anti-mutual-interference regulation according to the mutual-interference path comprises at least one of:
reconstructing a WiFi path of the WiFi network according to the mutual-interference path;
reconstructing a mobile network path of the mobile network according to the mutual-interference path;
adjusting a length of a mobile network antenna and/or a length of a WiFi antenna in the terminal according to the mutual-interference path;
adjusting a position of a signal feed point and/or a position of a ground feed point in the terminal according to the mutual-interference path;
adjusting a tank circuit of a mobile network antenna and/or a tank circuit of a WiFi antenna according to the mutual-interference path;
adjusting a radiation direction of a mobile network antenna and/or a radiation direction of a WiFi antenna according to the mutual-interference path;
adjusting a conformation of a mobile network antenna and/or a conformation of a WiFi antenna according to the mutual-interference path.

8. The method of claim 7, wherein the terminal comprises a plurality of WiFi antennas interconnected through a first switch; the reconstructing a WiFi path of the WiFi network according to the mutual-interference path comprises:
controlling the first switch according to the mutual-interference path, to adjust an interconnection state of the plurality of WiFi antennas, and acquire a WiFi path bypassing the mutual-interference path.

9. The method of claim 7 or 8, wherein the terminal comprises a plurality of WiFi front-end modules connected with a WiFi chip through a second switch, and the plurality of WiFi front-end modules are inter-communicable; the reconstructing a WiFi path of the WiFi network according to the mutual-interference path comprises:
controlling the second switch according to the mutual-interference path, to adjust an intercommunication state of the plurality of WiFi front-end modules, and acquire a WiFi path bypassing the mutual-interference path.

10. The method of claim 7, wherein the terminal comprises a plurality of mobile network antennas interconnected through a third switch; the reconstructing a mobile network path of the mobile network according to the mutual-interference path comprises:
controlling the third switch according to the mutual-interference path, to adjust an interconnection state of the plurality of mobile network antennas, and acquire a mobile network path bypassing the mutual-interference path.

11. The method of claim 7 or 10, wherein the terminal comprises a plurality of mobile network front-end modules connected with a radio frequency chip through a fourth switch, and the plurality of mobile network front-end modules are inter-communicable; the reconstructing a mobile network path of the mobile network according to the mutual-interference path comprises:
controlling the fourth switch according to the mutual-interference path, to adjust an intercommunication state of the plurality of mobile network front end modules, and acquire a mobile network path bypassing the mutual-interference path.

12. The method of claim 7, wherein the terminal comprises a plurality of WiFi antennas interconnected through a fifth switch, the terminal comprises a plurality of mobile network antennas interconnected through a sixth switch; the adjusting a length of a mobile network antenna and/or a length of a WiFi antenna in the terminal according to the mutual-interference path comprises:
controlling the fifth switch according to the mutual-interference path, to adjust an interconnection state of the plurality of WiFi antennas to change the length of the WiFi antenna in the terminal; and/or
controlling the sixth switch according to the mutual-interference path, to adjust an interconnection state of the plurality of mobile network antennas to change the length of the mobile network antenna in the terminal.

13. The method of claim 7, wherein the terminal comprises a plurality of signal feed points and/or a plurality of ground feed points; the adjusting a position of a signal feed point and/or a position of a ground feed point in the terminal according to the mutual-interference path comprises:
selecting a target signal feed point and/or a target ground feed point according to the mutual-interference path, the target signal feed point being the signal feed point for reducing the mutual interference in the plurality of signal feed points, and the target ground feed point being the ground feed point for reducing the mutual interference in the plurality of ground feed points.

14. The method of claim 7, wherein the adjusting a tank circuit of the mobile network antenna and/or a tank circuit of the WiFi antenna according to the mutual-interference path comprises:
adjusting a direction of the tank circuit of the mobile network antenna and/or a direction of the tank circuit of the WiFi antenna according to the mutual-interference path.

15. The method of claim 7 or 14, wherein the adjusting a tank circuit of the mobile network antenna and/or a tank circuit of the WiFi antenna according to the mutual-interference path comprises:
adjusting an area of the tank circuit of the mobile network antenna and/or an area of the tank circuit of the WiFi antenna according to the mutual-interference path.

16. The method of claim 15, wherein the adjusting a tank circuit of the mobile network antenna and/or a tank circuit of the WiFi antenna according to the mutual-interference path further comprises:
adjusting an antenna matching circuit and/or a tuning circuit, following an adjustment of the area of the tank circuit of the mobile network antenna and/or the area of the tank circuit of the WiFi antenna.

17. The method of claim 7, wherein the adjusting a radiation direction of the mobile network antenna and/or a radiation direction of the WiFi antenna according to the mutual-interference path comprises:
determining a mutual-interference direction according to the mutual-interference path; and
adjusting the radiation direction of the mobile network antenna and/or the radiation direction of the WiFi antenna according to the mutual-interference direction.

18. The method of claim 17, wherein the adjusting the radiation direction of the mobile network antenna and/or the radiation direction of the WiFi antenna according to the mutual-interference direction comprises at least one of:
adding a matching network component for changing a radiation pattern on ground feed points of the mobile network antenna and the WiFi antenna;
adding a decoupling filtering network component for changing a radiation pattern on ground feed points of the mobile network antenna and the WiFi antenna;
adding a branch for changing a radiation pattern on ground feed points of the mobile network antenna and the WiFi antenna.

19. The method of claim 7, wherein the terminal comprises multiple mobile network antennas and/or multiple WiFi antennas; the adjusting a conformation of the mobile network antenna and/or a conformation of the WiFi antenna according to the mutual-interference path comprises:
adjusting a connection between the multiple mobile network antennas to obtain a combination of mobile network antennas, so as to adjust the conformation of the mobile network antenna; and/or
adjusting a connection of the multiple WiFi antennas to obtain a combination of WiFi antennas, so as to adjust the conformation of the WiFi antenna.

20. The method of claim 19, wherein multiple antennas are selected from at least one of a monopole antenna, a slot antenna, an IFA, a PIFA, a LOOP antenna, or a metal-bezel antenna.

21. A terminal, comprising:
at least one processor;
a memory having at least one computer program stored thereon, the at least one computer program, executed by the at least one processor, causes the at least one processor to implement the anti-mutual-interference regulation method for terminal networks according to any one of claims 1 to 20.

22. A computer-readable storage medium having a computer program stored thereon, the computer program, executed by a processor, causes the processor to implement the anti-mutual-interference regulation method for terminal networks according to any one of claims 1 to 20.
